# EUROPEAN PATENT APPLICATION

(11) **EP 2 554 984 A1**
(43) Date of publication of application: **06.02.2013**
(21) Application number: 12178512.5
(22) Date of filing: 30.07.2012
(51) Int. Cl.: G01N 27/407

(54) **Gas sensor with thermal shock protection**

(30) Priority: 03.08.2011 US 201113197583
(71) Applicant: ROBERT BOSCH GMBH, 70442 Stuttgart (DE)
(72) Inventor: Burke, Michael, Woodruff, SC 29388 (US); Day, John, St. Greenville, SC 29615 (US); Koelmel, Adrian, 76461 Muggensturm (DE); Lowery, Hugh, Travelers Rest, SC 29690 (US)

(57) **Abstract**

A thermal shock protected gas sensor (20) includes a body (28), a ceramic sensor element (24) positioned in the body, and a protection tube (36). Thermal shock protection against liquid water impingement on the hot ceramic sensor element is provided by a sleeve (46) of ceramic fiber woven fabric positioned between the ceramic sensor element and the protection tube, and an annular gap (G) between the ceramic sensor element and the protection tube on at least one side of the sleeve. Alternately, thermal shock protection is provided by a porous monolithic cast ceramic layer (460) between the ceramic sensor element and the protection tube.

## Description

### BACKGROUND

The present invention relates to exhaust gas sensors for internal combustion engines, which are used to detect a lean/rich operating condition and communicate with an engine control unit to manage the performance of the engine. At engine start-up, before the exhaust gas heats up to operating temperature, water may exist in the exhaust passage. Because the ceramic sensor element is heated to very high temperatures for operation, it is susceptible to cracking in the event that liquid water contacts the sensor element. Thus, it may be necessary to delay the operation of the exhaust gas sensor until the exhaust gas has heated up sufficiently to eliminate most or all of the liquid water. One known solution to this is disclosed in U.S. Patent Application No. 12/130,701, published as U.S. 2009/0101502 and incorporated by reference herein, as providing a plasma-sprayed gamma alumina coating. Although this process has proven to be effective for protecting ceramic sensor elements from thermal shock at temperatures up to about 750 degrees Celsius, further advances in thermal shock protection and manufacturing cost reductions would be welcomed since the plasma spraying process presents inherent cost and risk of sensor element damage.

### SUMMARY

In one aspect, the invention provides a thermal shock protected gas sensor including a body, a ceramic sensor element positioned in the body, and a protection tube coupled to the body and substantially enclosing one end of the ceramic sensor element. The protection tube includes at least one aperture for admitting gas from outside the protection tube into and out of communication with the ceramic sensor element. A sleeve of ceramic fiber woven fabric is positioned between the ceramic sensor element and the protection tube. An annular gap exists between the ceramic sensor element and the protection tube on at least one side of the sleeve.

In another aspect, the invention provides a thermal shock protected gas sensor including a body, a ceramic sensor element positioned in the body, and a protection tube coupled to the body and substantially enclosing one end of the ceramic sensor element. The protection tube includes at least one aperture for admitting gas from outside the protection tube into and out of communication with the ceramic sensor element. A cast ceramic layer is positioned between the ceramic sensor element and the protection tube. The cast ceramic layer has a porous monolithic construction.

Other aspects of the invention will become apparent by consideration of the detailed description and accompanying drawings.

### BRIEF DESCRIPTION OF THE DRAWINGS

Fig. 1 is a side view of an assembled thermal shock protected gas sensor according to one construction of the present invention.

Fig. 2 is an exploded assembly view of the gas sensor of Fig. 1.

Fig. 3 is a cross-sectional view, taken along line 3-3, of the gas sensor of Fig. 1.

Fig. 4 a side view of an assembled thermal shock protected gas sensor according to another construction of the present invention.

Fig. 5 is an exploded assembly view of the gas sensor of Fig. 4.

Fig. 6 is a cross-sectional view, taken along line 6-6, of the gas sensor of Fig. 4.

Fig. 7 is a side view of an assembled thermal shock protected gas sensor according to another construction of the present invention, utilizing dual protection tubes.

Fig. 8 is an exploded assembly view of the gas sensor of Fig. 7.

Fig. 9 is a cross-sectional view, taken along line 9-9, of the gas sensor of Fig. 7.

Fig. 10 is a side view of an assembled thermal shock protected gas sensor according to another construction of the present invention, utilizing dual protection tubes.

Fig. 11 is an exploded assembly view of the gas sensor of Fig. 10.

Fig. 12 is a cross-sectional view, taken along line 12-12, of the gas sensor of Fig. 10.

Fig. 13 is a perspective view of a gas sensor like that of Figs. 10-12, modified with a closed-ended thermal protection sleeve.

Fig. 14 is side view of an assembled thermal shock protected gas sensor according to another construction of the present invention, including a cast ceramic thermal shock barrier.

Fig. 15A is a cross-sectional view, taken along line 15-15, of the gas sensor of Fig. 13.

Fig. 15B is a cross-sectional view, taken along line 15-15, of the gas sensor of Fig. 13, illustrating an alternate configuration of the cast ceramic thermal shock barrier including an air gap between the sensor element and the cast ceramic thermal shock barrier.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

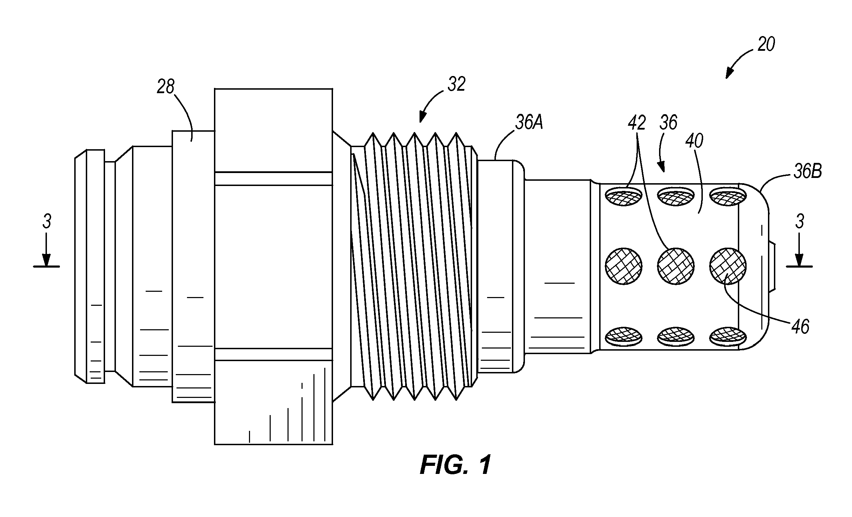

A gas sensor 20 according to one construction is shown in Figs. 1-3. The gas sensor 20 may be used as an oxygen sensor for an automobile with an internal combustion engine. The oxygen sensor 20 may be configured to detect a rich/lean operating condition of an internal combustion engine by monitoring the amount of oxygen present in the exhaust stream, and to send a corresponding signal to an engine control unit to manage the performance of the engine. However, the gas sensor 20 according to the construction described and illustrated herein may also be advantageous in other locations or environments for other purposes. The gas sensor 20 includes a sensor element 24 at least partially received within a metal housing or body 28. For example, the sensor element 24 can be held within a ceramic bushing 30 inside the body 28. The sensor element 24 may be a heated ceramic sensor element. For example, the sensor element 24 may include components substantially similar in construction to that described in U.S. 2009/0101502, the entire contents of which are hereby incorporated by reference, such as solid ceramic electrolyte foils and a heating unit used to electrically heat the sensor element to its operating temperature of between 600 degrees Celsius and 800 degrees Celsius. However, the features of the invention described below may be used with narrow-band and wide-band oxygen sensors, among other gas sensors, and the invention is not limited to any particular construction of ceramic sensor element. The body 28 includes a threaded portion 32 for mounting the gas sensor 20 in an internally-threaded bung provided in an exhaust gas pipe or conduit.

A protection tube 36 (e.g., of metal) is coupled to the body 28 to extend over the portion of the sensor element 24 exposed to the engine exhaust, or other gas to be sensed. The protection tube 36 is generally cylindrical in shape, having a proximal end 36A coupled to the body 28, a distal end 36B opposite the proximal end 36A, and a sidewall 40 therebetween. A plurality of apertures 42 in the sidewall 40 enable a portion of the to-be-sensed gas stream to flow through the protection tube 36 and across the sensor element 24. The apertures 42 can be circular holes as shown, or may alternately be other shapes, including slits or slots, and may be provided in any desired pattern. In the illustrated construction, the distal end 36B of the protection tube 36 is closed.

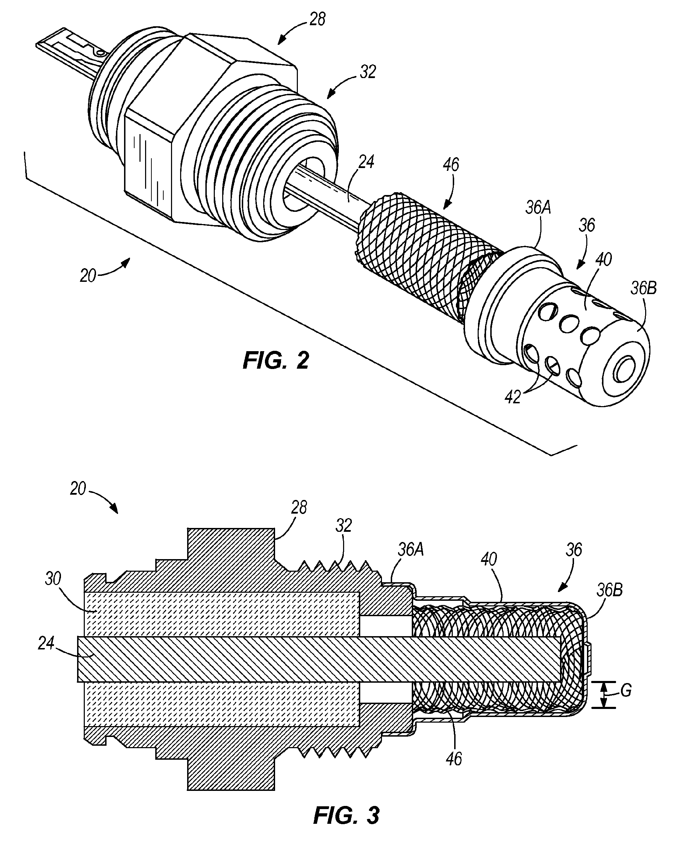

As best shown in Figs. 2 and 3, a sleeve 46 is positioned between the sensor element 24 and the protection tube 36. The sleeve 46 may be open at both the proximal and distal ends, or only at the proximal end. The sleeve 46 has a length at least as long as the length of the sensor element 24 extending from the body 28. Depending upon the actual outer dimension of the sleeve 46 in relation to the aperture in the body 28, the sleeve 46 may abut either the body 28 or the bushing 30. In some constructions, the sleeve 46 may be longer than the length of extension of the sensor element 24 from the body 28, or the bushing 30, so that the sleeve 46 is compressed when the gas sensor 20 is assembled. The sleeve 46 may be constructed of a ceramic fiber woven fabric-a fabric woven from ceramic fiber material. For example, the sleeve 46 may be a braided sleeve constructed of a fabric woven from a metal oxide ceramic fiber material, such as refractory aluminoborosilicate, aluminosilica, or alumina. Examples of commercially available materials are 3M™ NEXTEL™ varieties 312, 440, 550, 610, and 720. 3M™ NEXTEL™ 312 is made up of 62.5 percent Al₂O₃, 24.5 percent SiO₂, and 13 percent B₂O₃. 3M™ NEXTEL™ 440 is made up of 70 percent Al₂O₃, 28 percent SiO₂, and 2 percent B₂O₃. 3M™ NEXTEL™ 550 is made up of 73 percent Al₂O₃ and 27 percent SiO₂. 3M™ NEXTEL™ 610 is made up of at least 99 percent Al₂O₃. 3M™ NEXTEL™ 720 is made up of 85 percent Al₂O₃ and 15 percent SiO₂.

As shown in Fig. 3, the sleeve 46 can have an outside dimension substantially the same as an inside dimension of the protection tube 36 (e.g., these are diameter dimensions in the illustrated construction in which the inside of the protection tube 36 and the outside of the sleeve 46 are generally cylindrical). In some constructions, the sleeve 46 has an inner diameter of about 6.4mm (1/4") and has a thickness of about 1mm (e.g., between about 0.9mm and about 1.1mm). Because the inside dimension of the sleeve 46 is greater than the outside dimension of the sensor element 24, an annular gap G is formed between the sensor element 24 and the sleeve 46. The gap G acts as thermal insulation for the heated sensor element 24, while the sleeve 46 acts as a liquid barrier. By providing the annular gap G between the sensor element 24 and the sleeve 46 (rather than filling the entire space between the sensor element 24 and the inner protection tube 36 with the sleeve 46), the mass of the sleeve 46 is limited, which contributes positively to quick light off of the sensor 20 and ensures that the sleeve 46 does not absorb so much heat from the sensor element 24 so as to require additional power to be supplied to the sensor element 24 during operation. The annular gap G also limits the thickness of the sleeve 46 to ensure adequate gas permeability for the gas sensor 20 to operate with a fast response time. As described in further detail below, alternate means of providing an annular gap at a location between the outside of a sensor element and the inside of a protection tube are contemplated, and these various means may be interchanged among the various illustrated constructions.

Although the distal end 36B of the protection tube 36 is a closed end, and the corresponding distal end of the sleeve 46 is illustrated in Fig. 2 as being an open end, the distal end 36B of the protection tube 36 may have one or more apertures, and regardless of the configuration of the protection tube 36, the distal end of the sleeve 46 may be closed to cover or enclose the distal end of the sensor element 24. For example, the distal end of the sleeve 46 may be sewn shut with ceramic fiber thread, folded over, and/or bonded with a high temperature adhesive.

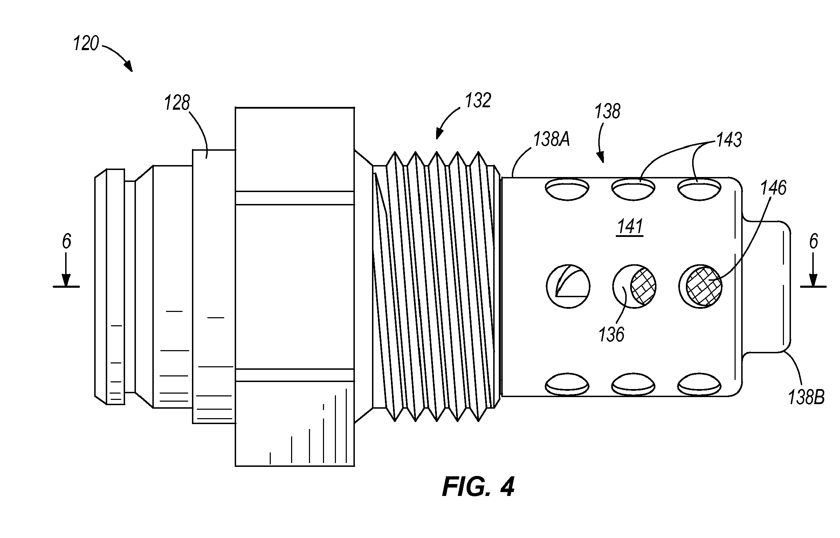

Figs. 4-6 illustrate a gas sensor 120 of another construction. The gas sensor 120 may be used as an oxygen sensor for an automobile with an internal combustion engine. The oxygen sensor 120 may be configured to detect a rich/lean operating condition of an internal combustion engine by monitoring the amount of oxygen present in the exhaust stream, and to send a corresponding signal to an engine control unit to manage the performance of the engine. However, the gas sensor 120 according to the construction described and illustrated herein may also be advantageous in other locations or environments for other purposes. The gas sensor 120 includes a sensor element 124 at least partially received within a metal housing or body 128. For example, the sensor element 124 can be held within a ceramic bushing 130 inside the body 128. The sensor element 124 may be a heated ceramic sensor element. For example, the sensor element 124 may include components substantially similar in construction to that described in U.S. 2009/0101502, the entire contents of which are hereby incorporated by reference, such as solid ceramic electrolyte foils and a heating unit used to electrically heat the sensor element to its operating temperature of between 600 degrees Celsius and 800 degrees Celsius. However, the features of the invention described below may be used with narrow-band and wide-band oxygen sensors, among other gas sensors, and the invention is not limited to any particular construction of ceramic sensor element. The body 128 includes a threaded portion 132 for mounting the gas sensor 120 in an internally-threaded bung provided in an exhaust gas pipe or conduit.

A dual protection tube assembly includes inner and outer protection tubes 136, 138 (e.g., of metal) coupled to the body 128 to extend over the portion of the sensor element 124 exposed to the engine exhaust, or other gas to be sensed. Both protection tubes 136, 138 are generally cylindrical in shape, each having a proximal end 136A, 138A coupled to the body 128, a distal end 136B, 138B opposite the proximal end 136A, 138A and a sidewall 140, 141 therebetween. A plurality of apertures 142, 143 are provided in the sidewall 140, 141 of each protection tube 136, 138 to enable a portion of the to-be-sensed gas stream to flow through the protection tubes 136, 138 and across the sensor element 124. The apertures 142, 143 can be circular holes as shown, or may alternately be other shapes, including slits or slots, and may be provided in any desired pattern. In the illustrated construction, the distal ends 136B, 138B of both protection tubes 136, 138 are closed.

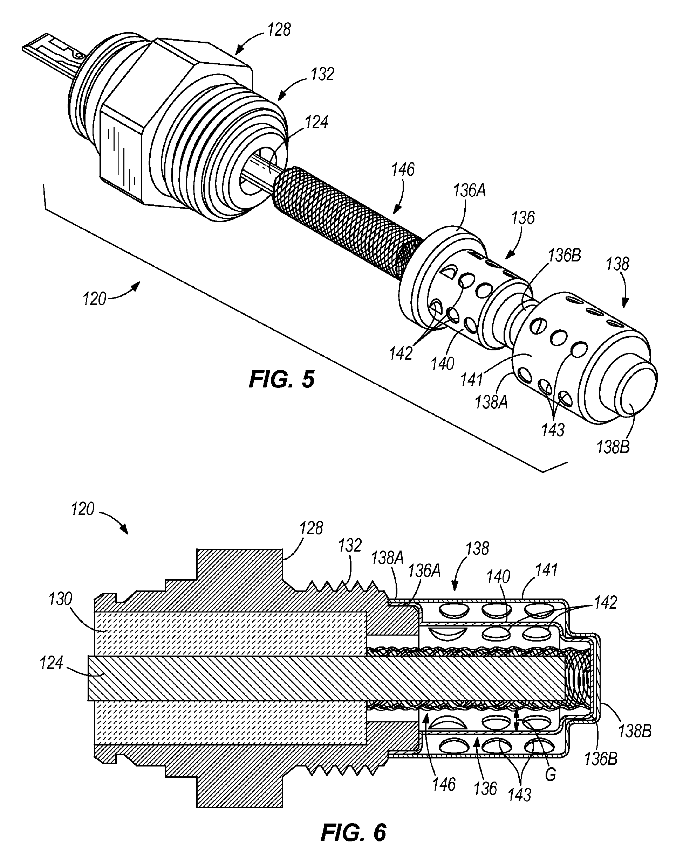

As best shown in Figs. 5 and 6, a sleeve 146 is positioned between the sensor element 124 and the inner protection tube 136. The sleeve 146 may be open at both the proximal and distal ends, or only at the proximal end. The sleeve 146 has a length at least as long as the length of the sensor element 124 extending from the body 128. Depending upon the actual outer dimension of the sleeve 146 in relation to the aperture in the body 128, the sleeve 146 may abut either the body 128 or the bushing 130. In some constructions, the sleeve 146 may be longer than the length of extension of the sensor element 124 from the body 128, or the bushing 130, so that the sleeve 146 is compressed when the gas sensor 120 is assembled. The sleeve 146 may be constructed of a ceramic fiber woven fabric-a fabric woven from ceramic fiber material. For example, the sleeve 146 may be a braided sleeve constructed of a fabric woven from a metal oxide ceramic fiber material, such as refractory aluminoborosilicate, aluminosilica, or alumina. Examples of commercially available materials are 3M™ NEXTEL™ varieties 312, 440, 550, 610, and 720.

As shown in Fig. 6, the sleeve 146 can have an inside dimension substantially the same as an outside dimension of the sensor element 124 so that the sleeve 146 is positioned directly on the sensor element 124 with substantially no space therebetween. In some constructions, the sleeve 146 has an inner diameter of about 3.2mm (1/8") and has a thickness of about 1mm (e.g., between about 0.9mm and about 1.1mum). Because the outside dimension of the sleeve 146 is less than the inside dimension of the inner protection tube 136, an annular gap G is formed therebetween. The sleeve 146 acts as both an insulator for the heated sensor element 124 and a liquid barrier. By providing the annular gap G between the sleeve 146 and the inner protection tube 136 (rather than filling the entire space between the sensor element 124 and the inner protection tube 136 with the sleeve 146), the mass of the sleeve 146 is limited, which contributes positively to quick light off of the sensor 120 and ensures that the sleeve 146 does not absorb so much heat from the sensor element 124 so as to require additional power to be supplied to the sensor element 124 during operation. The annular gap G also limits the thickness of the sleeve 146 to ensure adequate gas permeability for the gas sensor 120 to operate with a fast response time. As described in detail herein, alternate means of providing an annular gap at a location between the outside of a sensor element and the inside of a protection tube are contemplated, and these various means may be interchanged among the various illustrated constructions.

Although the distal ends 136B, 138B of the protection tubes 136, 138 are closed ends, and the corresponding distal end of the sleeve 146 is illustrated in Fig. 5 as being an open end, the distal end 136B, 138B of one or both of the protection tubes 136, 138 may have one or more apertures, and regardless of the configuration of the protection tubes 136, 138, the distal end of the sleeve 146 may be closed to cover or enclose the distal end of the sensor element 124. For example, the distal end of the sleeve 146 may be sewn shut with ceramic fiber thread, folded over, and/or bonded with a high temperature adhesive.

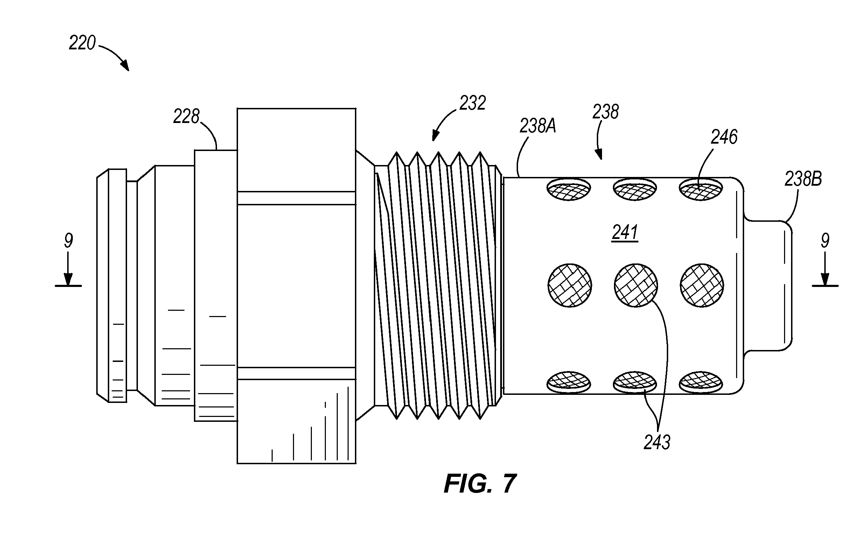

Figs. 7-9 illustrate a gas sensor 220 of yet another construction. The gas sensor 220 may be used as an oxygen sensor for an automobile with an internal combustion engine. The oxygen sensor 220 may be configured to detect a rich/lean operating condition of an internal combustion engine by monitoring the amount of oxygen present in the exhaust stream, and to send a corresponding signal to an engine control unit to manage the performance of the engine. However, the gas sensor 220 according to the construction described and illustrated herein may also be advantageous in other locations or environments for other purposes. The gas sensor 220 includes a sensor element 224 at least partially received within a metal housing or body 228. For example, the sensor element 224 can be held within a ceramic bushing 230 inside the body 228. The sensor element 224 may be a heated ceramic sensor element. For example, the sensor element 224 may include components substantially similar in construction to that described in U.S. 2009/0101502, the entire contents of which are hereby incorporated by reference, such as solid ceramic electrolyte foils and a heating unit used to electrically heat the sensor element to its operating temperature of between 600 degrees Celsius and 800 degrees Celsius. However, the features of the invention described below may be used with narrow-band and wide-band oxygen sensors, among other gas sensors, and the invention is not limited to any particular construction of ceramic sensor element. The body 228 includes a threaded portion 232 for mounting the gas sensor 220 in an internally-threaded threaded bung provided in an exhaust gas pipe or conduit.

A dual protection tube assembly includes inner and outer protection tubes 236, 238 (e.g., of metal) coupled to the body 228 to extend over the portion of the sensor element 224 exposed to the engine exhaust, or other gas to be sensed. Both protection tubes 236, 238 are generally cylindrical in shape, each having a proximal end 236A, 238A coupled to the body 228, a distal end 236B, 238B opposite the proximal end 236A, 238A and a sidewall 240, 241 therebetween. A plurality of apertures 242, 243 are provided in the sidewall 240, 241 of each protection tube 236, 238 to enable a portion of the to-be-sensed gas stream to flow through the protection tubes 236, 238 and across the sensor element 224. The apertures 242, 243 can be circular holes as shown, or may alternately be other shapes, including slits or slots, and may be provided in any desired pattern. In the illustrated construction, the distal ends 236B, 238B of both protection tube 236, 238 are closed.

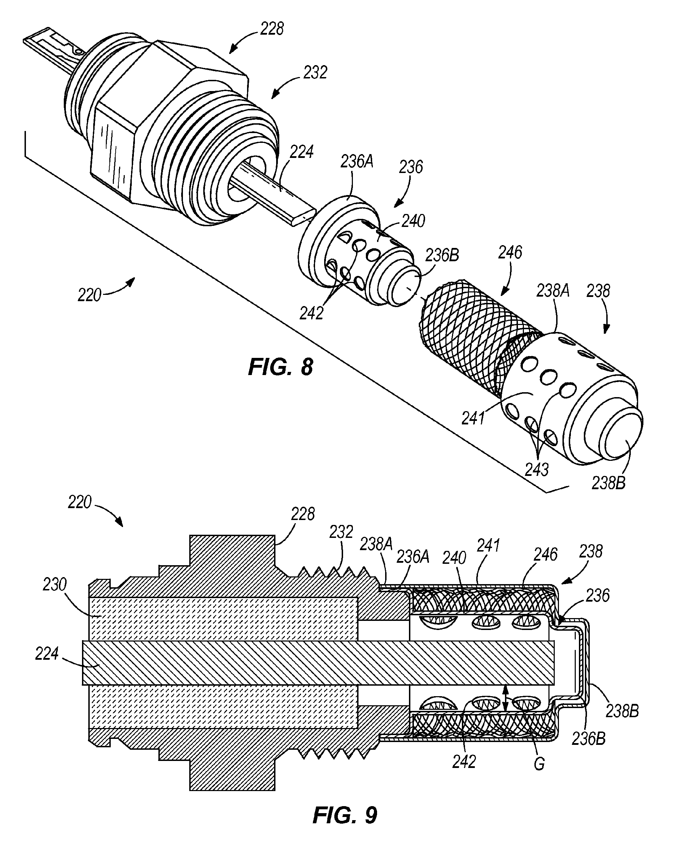

As best shown in Figs. 8 and 9, a sleeve 246 is positioned outside the sensor element 224 and inside the outer protection tube 238. More particularly, the sleeve 246 is positioned between the inner and outer protection tubes 236, 238. The sleeve 246 may be open at both the proximal and distal ends, or only at the proximal end. As shown, the sleeve 246 has an open distal end to avoid interfering with the closely-spaced or physically-engaging interface between the distal ends 236B, 238B of the inner and outer protection tubes 236, 238. The sleeve 246 has a length at least as long as an exposure length defined by the axial distance of the apertures 242 in the sidewall 240 of the inner protection tube 236, and in the illustrated construction, has a length about equal to or slightly greater than the axial space between flanges of the inner and outer protection tubes 236, 238 so that the sleeve 246 fills the axial space (and optionally is axially compressed) into the axial space between the protection tubes 236, 238 when the gas sensor 220 is assembled. In some constructions, the sleeve 246 may be as long or longer than the length of extension of the sensor element 224 from the body 228. The sleeve 246 may be constructed of a ceramic fiber woven fabric-a fabric woven from ceramic fiber material. For example, the sleeve 246 may be a braided sleeve constructed of a fabric woven from a metal oxide ceramic fiber material, such as refractory aluminoborosilicate, aluminosilica, or alumina. Examples of commercially available materials are 3M™ NEXTEL™ varieties 312, 440, 550, 610, and 720.

As shown in Fig. 9, the sleeve 246 can have an outside dimension substantially the same as an inside dimension of the outer protection tube 238. The sleeve 246 may or may not fill the radial space between the sidewalls 240, 241 of the inner and outer protection tubes 236, 238. For example, an annular gap may be present between the outside of the inner protection tube 236 and the inside of the sleeve 246. Alternately, the inside dimension of the sleeve 246 may be substantially the same as an outside dimension of the inner protection tube 236 so that the thickness of the sleeve 246 is about the same as the radial clearance between the inner and outer protection tubes 236, 238. In some constructions, the sleeve 246 has an inner diameter of about 12.7mm (1/2") and has a thickness of about 1mm (e.g., between about 0.9mm and about 1.1mm). Because the sleeve 246 is positioned between the inner and outer protection tubes 236, an annular gap G is formed between the sensor element 224 and the sleeve 246, and more particularly, between the sensor element 224 and the inner protection tube 236. The annular gap G acts as a thermal insulator and the sleeve 246 acts as a liquid barrier. By positioning the sleeve 246 outside the inner protection tube 236 to create the annular gap G, the mass of the sleeve 246 is limited, which contributes positively to quick light off of the sensor 220 and ensures that the sleeve 246 does not absorb so much heat from the sensor element 224 so as to require additional power to be supplied to the sensor element 224 during operation. The annular gap G also limits the thickness of the sleeve 246 to ensure adequate gas permeability for the gas sensor 220 to operate with a fast response time. As described in detail herein, alternate means of providing an annular gap at a location between the outside of a sensor element and the inside of a protection tube are contemplated, and these various means may be interchanged among the various illustrated constructions. This orientation also positively maintains the position and the shape of the sleeve 246.

Although the distal ends 236B, 238B of the protection tubes 236, 238 are closed ends, and the corresponding distal end of the sleeve 246 is illustrated in Fig. 8 as being an open end, the distal end 236B, 238B of one or both of the protection tubes 236, 238 may have one or more apertures, and regardless of the configuration of the protection tubes 236, 238, the distal end of the sleeve 246 may be closed to cover or enclose the distal end of the sensor element 224. For example, the distal end of the sleeve 246 may be sewn shut with ceramic fiber thread, folded over, and/or bonded with a high temperature adhesive.

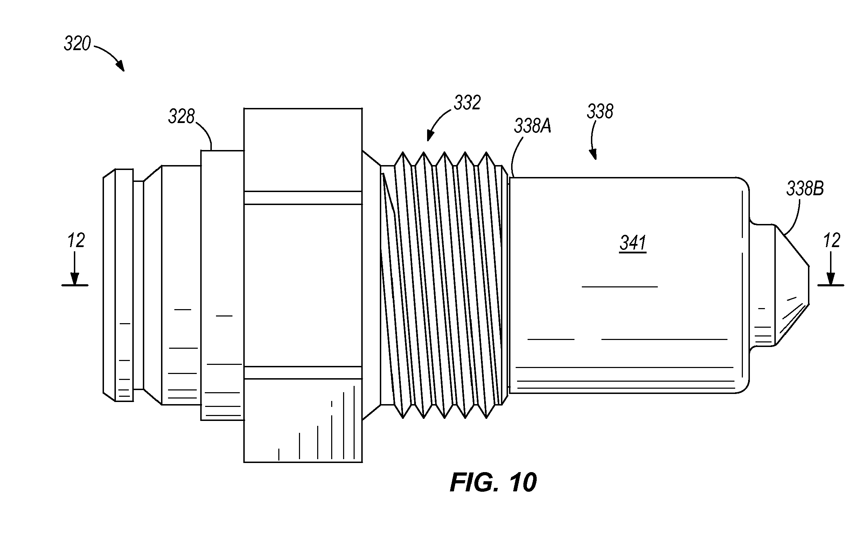

Figs. 10-12 illustrate a gas sensor 320 of yet another construction. The gas sensor 320 may be used as an oxygen sensor for an automobile with an internal combustion engine. The oxygen sensor 320 may be configured to detect a rich/lean operating condition of an internal combustion engine by monitoring the amount of oxygen present in the exhaust stream, and to send a corresponding signal to an engine control unit to manage the performance of the engine. However, the gas sensor 320 according to the construction described and illustrated herein may also be advantageous in other locations or environments for other purposes. The gas sensor 320 includes a sensor element 324 at least partially received within a metal housing or body 328. For example, the sensor element 324 can be held within a ceramic bushing 330 inside the body 328. The sensor element 324 may be a heated ceramic sensor element. For example, the sensor element 324 may include components substantially similar in construction to that described in U.S. 2009/0101502, the entire contents of which are hereby incorporated by reference, such as solid ceramic electrolyte foils and a heating unit used to electrically heat the sensor element to its operating temperature of between 600 degrees Celsius and 800 degrees Celsius. However, the features of the invention described below may be used with narrow-band and wide-band oxygen sensors, among other gas sensors, and the invention is not limited to any particular construction of ceramic sensor element. The body 328 includes a threaded portion 332 for mounting the gas sensor 320 in an internally-threaded bung provided in an exhaust gas pipe or conduit.

A dual protection tube assembly includes inner and outer protection tubes 336, 338 (e.g., of metal) coupled to the body 328 to extend over the portion of the sensor element 324 exposed to the engine exhaust, or other gas to be sensed. Both protection tubes 336, 338 are generally cylindrical in shape, each having a proximal end 336A, 338A coupled to the body 328, a distal end 336B, 338B opposite the proximal end 336A, 338A and a sidewall 340, 341 therebetween. A plurality of apertures 342, 343 are provided in each protection tube 336, 338 to enable a portion of the to-be-sensed gas stream to flow through the protection tubes 336, 338 and across the sensor element 324. The inner protection tube 336 includes apertures 342A in the sidewall 340, adjacent the proximal end 336A (i.e., positioned along the sidewall 340 closer to the proximal end 336A than the distal end 336B). The inner protection tube 336 further includes apertures 342B in the end wall at the distal end 336B. The sidewall 341 of the outer protection tube 338 does not include any apertures. Rather, apertures 343 are only formed in the end wall at the distal end 338B of the outer protection tube 338. All of the apertures 342A, 342B, 343 are shown as being circular or semi-circular holes, but may alternately be other shapes, including slits or slots, and may be provided in any desired pattern. The illustrated protection tube construction featuring a ring of apertures 343 (e.g., about 12) around a central aperture 343 in the distal end 338B of the outer protection tube 338, and a ring of apertures 342B (e.g., about 8) in the distal end 336B of the inner protection tube 336 (paired with the sidewall apertures 342A at the proximal end of the inner protection tube 336) has proven to excel at limiting the amount of water that is able to reach the inside of the inner protection tube 336 while maintaining excellent gas flow therethrough (for fast sensor response time).

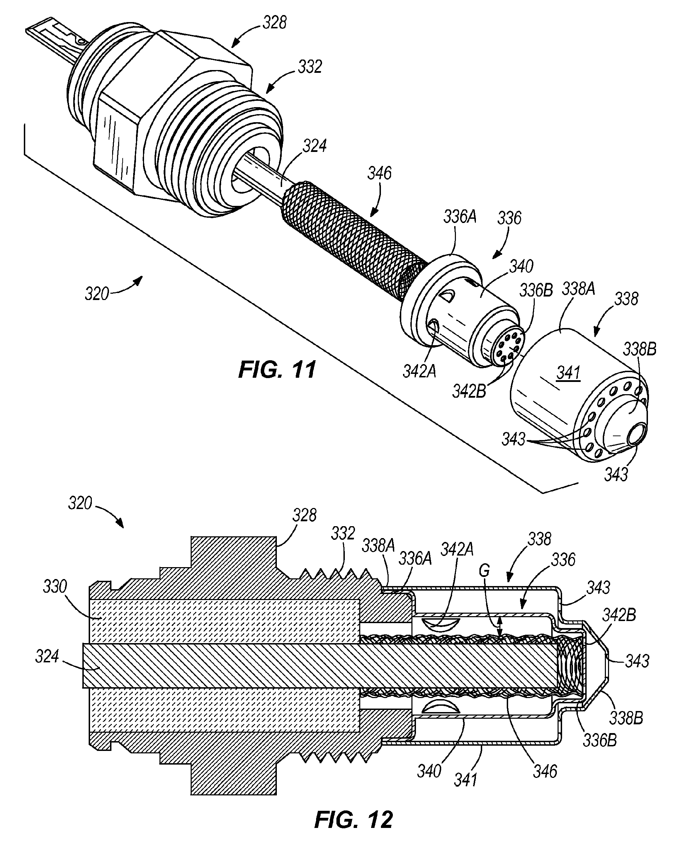

As best shown in Figs. 11 and 12, a sleeve 346 is positioned between the sensor element 324 and the inner protection tube 336. The sleeve 346 may be open at both the proximal and distal ends, or only at the proximal end. The sleeve 346 has a length at least as long as the length of the sensor element 324 extending from the body 328. Depending upon the actual outer dimension of the sleeve 346 in relation to the aperture in the body 328, the sleeve 346 may abut either the body 328 or the bushing 330. In some constructions, the sleeve 346 may be longer than the length of extension of the sensor element 324 from the body 328, or the bushing 330, so that the sleeve 346 is compressed when the gas sensor 320 is assembled. The sleeve 346 may be constructed of a ceramic fiber woven fabric-a fabric woven from ceramic fiber material. For example, the sleeve 346 may be a braided sleeve constructed of a fabric woven from a metal oxide ceramic fiber material, such as refractory aluminoborosilicate, aluminosilica, or alumina. Examples of commercially available materials are 3M™ NEXTEL™ varieties 312, 440, 550, 610, and 720.

As shown in Fig. 12, the sleeve 346, like the sleeve 146 of Figs. 4-6, can have an inside dimension substantially the same as an outside dimension of the sensor element 324 so that the sleeve 346 is positioned directly on the sensor element 324 with substantially no space therebetween. In some constructions, the sleeve 346 has an inner diameter of about 3.2mm (1/8") and has a thickness of about 1mm (e.g., between about 0.9mm and about 1.1mm). Because the outside dimension of the sleeve 346 is less than the inside dimension of the inner protection tube 336, an annular gap G is formed therebetween. The sleeve 346 acts as both an insulator for the heated sensor element 324 and a liquid barrier. By providing the annular gap G between the sleeve 346 and the inner protection tube 336, the mass of the sleeve 346 is limited, which contributes positively to quick light off of the sensor 320 and ensures that the sleeve 346 does not absorb so much heat from the sensor element 324 so as to require additional power to be supplied to the sensor element 324 during operation. The annular gap G also limits the thickness of the sleeve 346 to ensure adequate gas permeability for the gas sensor 320 to operate with a fast response time. As described in detail herein, alternate means of providing an annular gap at a location between the outside of a sensor element and the inside of a protection tube are contemplated, and these various means may be interchanged among the various illustrated constructions.

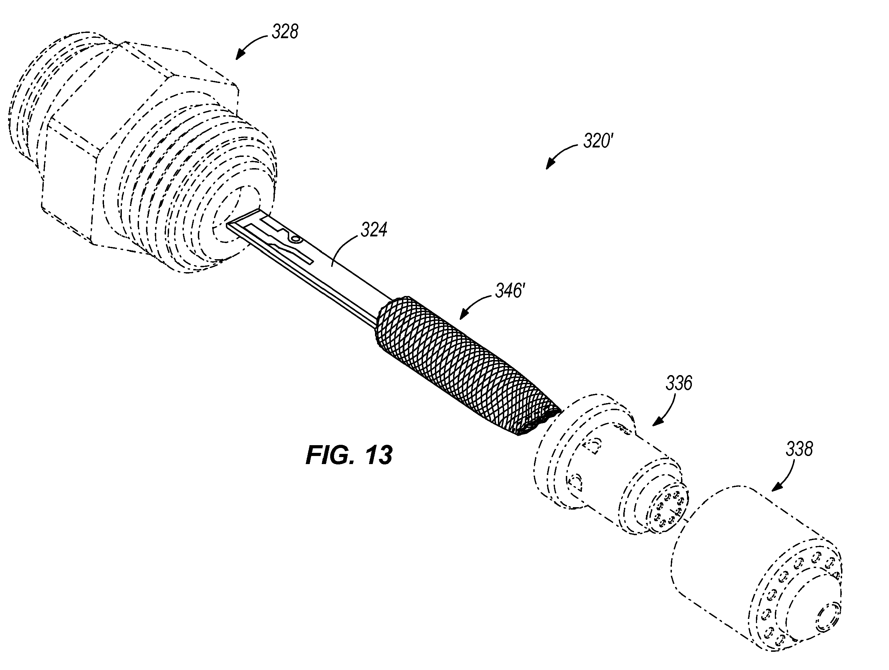

Although illustrated in Fig. 11 as being an open end, the distal end of the sleeve 346 may be closed to cover or enclose the distal end of the sensor element 324. A modified gas sensor 320' is shown in Fig. 13. The gas sensor 320' is identical to the gas sensor 320 of Figs. 10-12 except that a sleeve 346' with a closed distal end is used in place of the open-ended sleeve 346. In the illustrated construction, the distal end of the sleeve 346' is sewn shut, and the thread used may be ceramic fiber thread such as 3M™ NEXTEL™ thread. However, the distal end of the sleeve 346' may be closed in other ways such as being folded over, and/or bonded with a high temperature adhesive. Depending upon the size, number, and position of apertures 342A, 342B, 343 in the protection tubes 336, 338, it may be particularly advantageous to provide the sleeve 346 with a closed distal end when apertures are present in the distal ends 336B, 338B of the protection tubes. On the other hand, the protection tubes 336, 338 can be designed to eliminate the possibility of liquid water impinging directly on the distal end of the sensor element 324.

Figs. 10-12 illustrate that a sleeve 346, similar to the sleeve 146 of Figs. 4-6 can be utilized with an alternate type of dual protection tube assembly. It should be appreciated that these sleeves 146, 346, as well as the other sleeves 46, 246 and modifications thereof, can also be used with other configurations of single or multiple protection tubes, including any described and shown herein, those known to those of skill in the art, and modifications thereof.

Regardless of the type or configuration of the ceramic fiber woven fabric sleeve or protection tube(s), an organic polymer binder may be added to the sleeve to aid assembly. For example, the sleeve may be dipped in or sprayed with an acrylic emulsion binder (e.g., DURAMAX™ B1022 available from The Dow Chemical Co.) or a polyvinyl alcohol (PVA) solution to harden the fabric, giving the sleeve a rigid shape. The rigid-shaped sleeve is then able to be robotically-handled and assembled with a sensor element and/or protection tube(s). After assembly, the sensor (or a protection tube subassembly containing the sleeve) can be heated to a temperature above the melting point of the binder and below the melting point of the ceramic fiber of the sleeve to eliminate or "bake out" the binder material from the sleeve.

Furthermore, it should be noted that certain constructions of the sensors described above, namely those in which the sleeve is not positioned directly on the sensor element, lend themselves to an assembly method in which the protection tube(s) are provided as a subassembly with the sleeve. Thus, the protection tube and sleeve subassembly may be manufactured and assembled off-site from the sensor final assembly site. Even if not manufactured and assembled off-site, the production of a subassembly containing the protection tube(s) and sleeve enables much more efficient processing, handling, and final assembly, as fewer separate parts need to be tracked, stored, and handled. In these constructions, the final assembly includes the steps of coupling the sensor element with the sensor body and coupling the subassembly of the sleeve and the protection tube(s) to the sensor body, so that no separate steps of handling or positioning the sleeve are necessary, and only one coupling need be established between the protection tube(s) and the body even if multiple protection tubes are used.

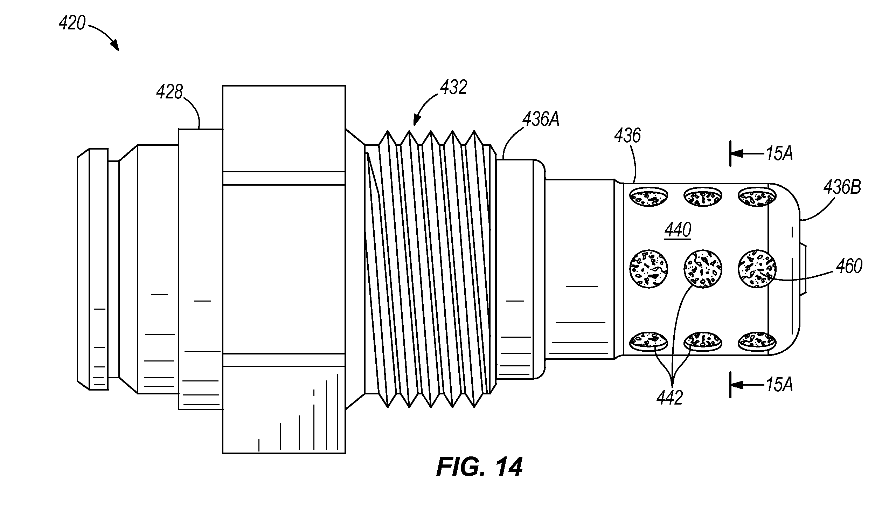

Figs. 14-15B illustrate a gas sensor 420 of yet another construction. As described in further detail below, the gas sensor 420 is protected from thermal shock like the other gas sensors described above, but in the case of the gas sensor 420, thermal shock protection is provided by a cast, porous ceramic material.

The gas sensor 420 may be used as an oxygen sensor for an automobile with an internal combustion engine. The oxygen sensor 420 may be configured to detect a rich/lean operating condition of an internal combustion engine by monitoring the amount of oxygen present in the exhaust stream, and to send a corresponding signal to an engine control unit to manage the performance of the engine. However, the gas sensor 420 according to the construction described and illustrated herein may also be advantageous in other locations or environments for other purposes. The gas sensor 420 includes a sensor element 424 at least partially received within a metal housing or body 428. The sensor element 424 may be a heated ceramic sensor element. For example, the sensor element 424 may include components substantially similar in construction to that described in U.S. 2009/0101502, the entire contents of which are hereby incorporated by reference, such as solid ceramic electrolyte foils and a heating unit used to electrically heat the sensor element to its operating temperature of between 600 degrees Celsius and 800 degrees Celsius. However, the features of the invention described below may be used with narrow-band and wide-band oxygen sensors, among other gas sensors, and the invention is not limited to any particular construction of ceramic sensor element. The body 428 includes a threaded portion 432 for mounting the gas sensor 420 in an internally-threaded bung provided in an exhaust gas pipe or conduit.

A protection tube 436 (e.g., of metal) is coupled to the body 428 to extend over the portion of the sensor element 424 exposed to the engine exhaust, or other gas to be sensed. The protection tube 436 is generally cylindrical in shape, having a proximal end 436A coupled to the body 428, a distal end 436B opposite the proximal end 436A, and a sidewall 440 therebetween. A plurality of apertures 442 in the sidewall 440 enable a portion of the to-be-sensed gas stream to flow through the protection tube 436 and across the sensor element 424. The apertures 442 can be circular holes as shown, or may alternately be other shapes, including slits or slots, and may be provided in any desired pattern. In the illustrated construction, the distal end 436B of the protection tube 436 is closed, but other protection tube configurations including those with distal end apertures and those with multi-tube assemblies are optional.

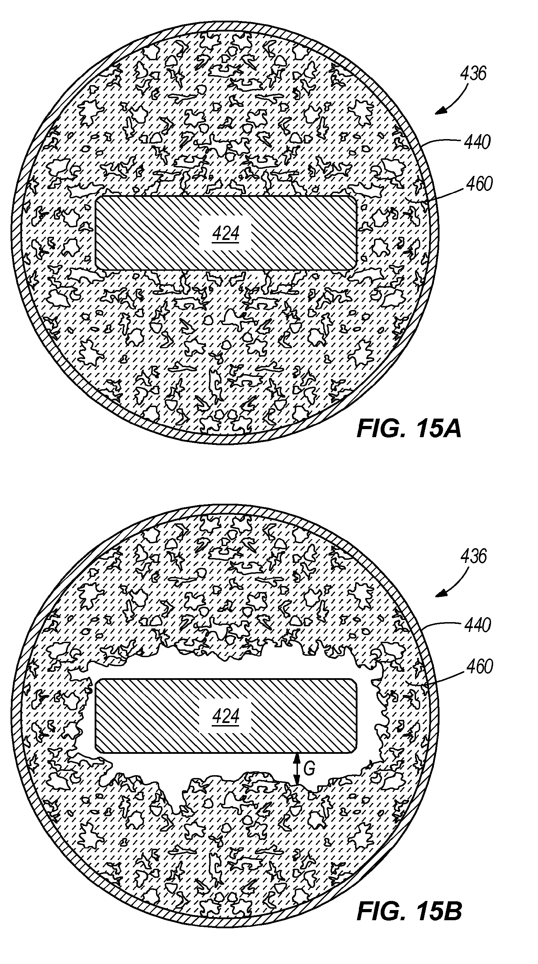

As shown in Fig. 15A, a porous ceramic layer 460 is provided between the sensor element 424 and the protection tube 436 to provide thermal insulation for the heated sensor element 424 and act as a liquid barrier to prevent liquid water from impinging directly onto the sensor element 424. The porous ceramic layer 460 can be manufactured of various materials according to various methods. For example, a castable ceramic material can be mixed into a viscous paste with carbon powder and hollow ceramic microspheres and the resulting material cast into form in a mold with at least a portion of the sensor element 424 cast therein. For example, a castable ceramic mixture may include about 50 percent by weight castable ceramic in addition to about 20 percent by weight carbon powder and about 30 percent by weight hollow ceramic microspheres. In some constructions, the porous ceramic layer 460 may be made by pouring the viscous paste directly into the protection tube 436, which then serves as the casting mold. The castable ceramic material may be an electrically-resistant ceramic adhesive (e.g., a MgO-ZrO₂-based ceramic adhesive such as RESBOND™ 919 available from Cotronics Corp. of Brooklyn, NY). The castable ceramic material may alternately be a refractory cement with a ceramic base (e.g., at least one of alumina, ceramic foam, silica, silicon carbide, and zirconia) such as RESCOR™ RTC-60 from Cotronics Corp. The hollow ceramic microspheres can be alumina bubbles in some constructions, such as DURALUM® AB from Washington Mills Ceramics Corporation of Sun Prairie, WI. After the paste hardens, the material is cured at a temperature between about 700 degrees Celsius and about 800 degrees Celsius. During the curing, the carbon is burned out to create the pore structure within the ceramic layer 460. The porosity achieves a mass reduction and ensures ample gas diffusion uniformly through the ceramic layer 460. The hollow ceramic microspheres achieve a further mass reduction compared to solid ceramic material.

Alternatively, a porous ceramic castable material such as CERCANAM® from Ceramatec Company of Salt Lake City, UT may be used with or without hollow ceramic microspheres, as the material already includes nano-sized or micron-sized pores resulting in a total pore volume of between about 20 percent and about 40 percent. This material may be processed similar to that described above, but can be cured at much lower temperatures (i.e., about 150 degrees Celsius), which reduces process cost and complexity.

Fig. 15B illustrates the gas sensor 420 described above with the addition of an annular gap G between the sensor element 424 and the porous ceramic layer 460 to further minimize the temperature differential across the heated sensor element 424 in the event of liquid water contact. In one construction, the annular gap G can be formed by applying a temporary organic film to the sensor element 424. For example, the sensor element 424, or a portion thereof, can be dipped into or sprayed with an acrylic binder such as DURAMAX™ B1022 from The Dow Chemical Co. or a polyvinyl alcohol (PVA) solution. Heating to about 80 degrees Celsius cures the organic film to a solid film which is subsequently burned out during curing of the castable ceramic material, leaving the gap G.

The gas sensors described above provide thermal shock protection to at least 900 degrees Celsius. In the context of the present application, "thermal shock protection" to a particular temperature is used to describe that the ceramic sensor element will not crack when heated to that temperature and subjected to a drop of liquid water (e.g., 10 µL). While providing improved thermal shock protection compared to plasma-sprayed gamma alumina coatings, faster response times are also achieved owing to improved gas diffusion of the thermal shock protection means described herein. The gas sensors of the present application may also be suitable for use in an air intake passage of an internal combustion engine, among other uses. The thermal robustness and fast response of these gas sensors make them advantageous for O₂ sensors, NOₓ sensors, or any other ceramic gas sensor that operates at high temperature and may encounter liquid water.

Various features and advantages of the invention are set forth in the following claims.

## Claims

1. A thermal shock protected gas sensor comprising:
a body;
a ceramic sensor element positioned in the body;
a protection tube coupled to the body and substantially enclosing one end of the ceramic sensor element, the protection tube including at least one aperture for admitting gas from outside the protection tube into and out of communication with the ceramic sensor element;
a sleeve of ceramic fiber woven fabric positioned between the ceramic sensor element and the protection tube; and
an annular gap between the ceramic sensor element and the protection tube, on at least one side of the sleeve.

2. The thermal shock protected gas sensor of claim 1, wherein the protection tube is an inner protection tube and the gas sensor further includes an outer protection tube positioned around the inner protection tube and including at least one aperture.

3. The thermal shock protected gas sensor of claim 2, wherein the sleeve is positioned directly against the inner protection tube.

4. The thermal shock protected gas sensor of claim 3, wherein the sleeve is positioned between the outer protection tube and the inner protection tube.

5. The thermal shock protected gas sensor of claim 2, wherein the sleeve is positioned directly on the ceramic sensor element.

6. The thermal shock protected gas sensor of claim 5, wherein the annular gap is maintained between the sleeve and the inner protection tube.

7. The thermal shock protected gas sensor of claim 1, wherein the sleeve is positioned in contact with an inside of the protection tube, and wherein the annular gap is maintained between the ceramic sensor element and the sleeve.

8. The thermal shock protected gas sensor of claim 1, wherein the sleeve is positioned directly on the ceramic sensor element, and the annular gap is maintained between the sleeve and the protection tube.

9. The thermal shock protected gas sensor of claim 1, wherein the sleeve has an open proximal end adjacent the body and an open distal end opposite the proximal end.

10. The thermal shock protected gas sensor of claim 1, wherein the sleeve has an open proximal end adjacent the body and a closed distal end opposite the proximal end.

11. The thermal shock protected gas sensor of claim 1, wherein the sleeve is formed from ceramic fiber strands of at least one of refractory aluminoborosilicate, aluminosilica, and alumina.

12. The thermal shock protected gas sensor of claim 1, wherein the sleeve is a braided sleeve having a thickness of about 1 millimeter.

13. A thermal shock protected gas sensor comprising:
a body;
a ceramic sensor element positioned in the body;
a protection tube coupled to the body and substantially enclosing one end of the ceramic sensor element, the protection tube including at least one aperture for admitting gas from outside the protection tube into and out of communication with the ceramic sensor element; and
a cast ceramic layer between the ceramic sensor element and the protection tube, the cast ceramic layer having a porous monolithic construction.

14. The thermal shock protected gas sensor of claim 13, further comprising an annular gap between the ceramic sensor element and the cast ceramic layer.

15. The thermal shock protected gas sensor of claim 13, wherein the cast ceramic layer includes hollow ceramic microspheres.

16. The thermal shock protected gas sensor of claim 15, wherein the hollow ceramic microspheres are alumina bubbles.

17. The thermal shock protected gas sensor of claim 13, wherein the cast ceramic layer includes an electrically-resistant ceramic adhesive.

18. The thermal shock protected gas sensor of claim 17, wherein the electrically-resistant ceramic adhesive is a MgO-ZrO₂-based ceramic adhesive.

19. The thermal shock protected gas sensor of claim 13, wherein the cast ceramic layer includes a refractory cement with a ceramic base.

20. The thermal shock protected gas sensor of claim 19, wherein the ceramic base of the refractory cement includes at least one of alumina, ceramic foam, silica, silicon carbide and zirconia.
